# EUROPÄISCHE PATENTSCHRIFT

(11) **EP 2 539 181 B1**
(45) Veröffentlichungstag und Bekanntmachung des Hinweises auf die Patenterteilung: **16.04.2014**
(21) Anmeldenummer: 11704398.4
(22) Anmeldetag: 10.02.2011
(51) Int. Cl.: B60R 13/04, B60Q 1/32

(54) **BELEUCHTBARES BAUTEIL**
PART WHICH MAY BE LIT
PIÈCE POUVANT ÊTRE ECLAIRÉE

(30) Priorität: 25.02.2010 CH 232102010
(43) Veröffentlichungstag der Anmeldung: 02.01.2013
(60) Teilanmeldung: 13155785.2
(73) Patentinhaber: Weidmann Plastics Technology AG, 8640 Rapperswil (CH)
(72) Erfinder: ENGLERT, Thomas, CH-8646 Wagen (CH)
(74) Vertreter: Rutz, Andrea
(86) Internationale Anmeldenummer: PCT/CH2011/000024
(87) Internationale Veröffentlichungsnummer: WO 2011/103692

(56) Entgegenhaltungen:
- DE-A1- 4 421 942
- DE-A1- 10 322 187
- DE-A1- 10 332 975
- US-B1- 7 287 892

## Beschreibung

Die Erfindung betrifft ein beleuchtbares Bauteil mit einer Sichtseite, einem die Sichtseite umgebenden Rand und einer Rückseite, umfassend ein flächiges Dekorelement mit wenigstens einem lichtdurchlässigen Bereich und wenigstens einem lichtundurchlässigen Bereich, Beleuchtungsmittel zum Beleuchten des wenigstens einen lichtdurchlässigen Bereichs und wenigstens eine zwischen dem Dekorelement und dem Beleuchtungsmittel angeordnete lichtführende Schicht, die an einer Rückseite des Dekorelementes angebracht ist.

Solche Bauteile sind beispielsweise als Türeinstiegleisten für Fahrzeuge vorgesehen. Sie können an entsprechender Stelle an der Fahrzeugkarosserie beispielsweise mit Rastmitteln angebracht werden. Auf der Oberseite bzw. Sichtseite des Bauteils bildet der lichtdurchlässige Bereich beispielsweise einen Schriftzug oder/und eine Symbolik. Innerhalb des Bauteils sind Beleuchtungsmittel, beispielsweise eine Leuchtfolie, LED's oder dergleichen angeordnet, welche durch die transparente lichtführende Schicht hindurch den lichtdurchlässigen Bereich beleuchten. Das flächige Dekorelement ist hier beispielsweise ein Metallblech, das in einem Spritzgusswerkzeug durch Hinterspritzen mit der lichtrührenden Schicht geformt worden ist. Diese Schicht umgibt vorzugsweise die gesamte Rückseite des Dekorelementes.

Bei einem solchen Bauteil besteht nun die Schwierigkeit, dass im montierten Zustand am Rand durch einen in vielen Fällen kaum vermeidbaren Spalt Lecklicht austreten kann, was in der Regel nicht erwünscht ist. Ein solches Lecklicht könnte an sich in einfacher Weise vermieden werden, indem an die lichtführende Schicht ein Rahmen aus einem lichtundurchlässigen Kunststoff angespritzt wird. So offenbart beispielsweise die DE-C-40 06 649 eine Schalterblende, bei welcher an ein flächiges Dekorelement ein transparenter Kunststoff angespritzt ist. Um einen unerwünschten Lichtaustritt zu vermeiden, ist an das Dekorelement zudem ein Blendenkorpus aus lichtundurchlässigem Kunststoff angespritzt. Dieser Kunststoff umgibt den transparenten Kunststoff rahmenförmig. Die EP-A-0 703 051 offenbart ein Bauteil zum Herstellen eines Tastenschalters. An die Rückseite eines Dekorelementes ist eine durchleuchtbare Lichtleitplatte angespritzt. Diese ist von einem lichtundurchlässigen Rahmen umgeben, der an das Dekorelement und die Lichtleitplatte angespritzt ist. Die WO 98/49700 offenbart ein Blendenteil, das einen transparenten Einsatzteil aufweist, der von einem nichttransparenten Material umspritzt ist.

In der DE 103 32 975 ist ein Bauteil nach dem Oberbegriff des Anspruchs 1 mit einem Dekorelement und einem daran befestigten Trägerteil offenbart. Das Trägerteil weist im Bereich einer Ausnehmung des Dekorelements ein durchsichtiges und in den übrigen Bereichen ein undurchsichtiges Kunststoffmaterial auf.

Die DE 103 22 187 beschreibt ein Dekorelement, an welchem rückseitig ein durchsichtiges Einsatzteil angebracht ist. Das Dekorelement und das durchsichtige Einsatzteil sind von einem verdickten Randbereich einer Tragleiste umrandet.

Die genannten Bauteile sind in der Regel Serienteile, die in sehr hohen Stückzahlen hergestellt werden müssen. An solche Bauteile werden die Anforderungen gestellt, dass sie kostengünstig hergestellt werden können und dennoch funktionssicher sind sowie hohen ästhetischen Anforderungen genügen. Insbesondere ist es wesentlich, dass die Sichtseite eine ansprechende Oberfläche besitzt und Lecklicht insbesondere am Rand des Bauteiles vermieden werden kann.

Der Erfindung liegt die Aufgabe zugrunde, ein Bauteil der genannten Art zu schaffen, bei welchem Lecklicht weitgehend vermieden werden kann und das dennoch kostengünstig hergestellt werden kann.

Die Aufgabe ist durch die Merkmale des Anspruchs 1 gelöst. Dabei sind Mittel vorgesehen, welche Licht beim Transport von den Beleuchtungsmitteln durch die wenigstens eine lichtführende Schicht zum genannten Rand hin im Wesentlichen vollständig absorbieren und/öder streuen. Solche Mittel umfassen ein Pigment, das in die lichtführende Schicht eingebracht ist. Hierbei wird der Umstand zunutze gemacht, dass der Weg des Lichtes vom Beleuchtungsmittel zum lichtdurchlässigen Bereich wesentlich kürzer ist als der Weg zu einer möglichen Leckstelle am Rand des Bauteils. Auf dem vergleichsweise langen Weg zur möglichen Leckstelle kann das Licht im Wesentlichen beispielsweise durch ein solches Pigment im Wesentlichen vollständig absorbiert und/oder gestreut werden. Durch die Streuung kann ein Lecklicht im Wesentlichen vollständig vermieden werden. Beim erfindungsgemässen Bauteil können somit mögliche Lichtleckstellen grösser ausgebildet sein als bei bekannten Bauteilen. Die Erfindung ermöglicht somit insbesondere die Herstellung von Bauteilen mit grösseren Fertigungstoleranzen, da Licht im Bauteil vor erreichen der möglichen Leckstelle im Wesentlichen vollständig absorbiert und/oder gestreut wird und somit störendes Lecklicht vermieden werden kann. Eine im Wesentlichen vollständige Absorbtion und/oder Streuung liegt dann vor, wenn die Lichtstärke um 90% vermindert wurde, die Lichtstärke an der Leckstelle höchstens noch 10% der im beleuchteten Bereich vorhandenen Lichtstärke, gemessen in cd/m² beträgt. Vorzugsweise ist die Reduktion aber grösser und beträgt vorzugsweise 99%. Beträgt in diesem Fall die Lichtstärke im beleuchteten Bereich 100 cd/m² (Candela), so beträgt sie an der Leckstelle höchstens 10 cd/m² und vorzugsweise höchstens 1 cd/m².

Gemäss einer Weiterbildung der Erfindung ist die Haftschicht an der Rückseite des Dekorelementes. Die Haftschicht und/oder die andere Schicht ist beispielsweise ein Haftvermittler, ein Klebstoff oder ein Lack. Diese Haftschicht ermöglicht eine feste Verbindung der angespritzten lichtrührenden Schicht mit dem Dekorelement. Das Dekorelement kann somit vollständig von der lichtführenden Schicht hinterspritzt werden. Die lichtführende Schicht formt somit das flächige Dekorelement während des Spritzgussvorganges. Da das Dekorelement lediglich von der wenigstens einen lichtführenden Schicht hinterspritzt wird, kann eine exakte Formgebung und damit eine Aussenseite bzw. Sichtseite des Dekorelementes gewährleistet werden, welche die gewünschte Form aufweist. Die lichtführende Schicht und das Dekorelement können somit sehr einfach und dennoch präzis als Einheit hergestellt werden. Diese Einheit kann dann mit den Beleuchtungsmitteln und gegebenenfalls einem Gehäuse zusammengefügt werden. Das auf diese Weise hergestellte Bauteil kann zur Herstellung beispielsweise einer Einstiegsleiste, einer Zierleiste, eines Bedienelementes oder einer Taste verwendet werden. Das Dekorelement ist beispielsweise ein Element für ein Kraftfahrzeug, beispielsweise eine Einstiegsleiste, Mittelkonsole, Dachhimmelkonsole, Türe, Türverkleidung oder auch eine Anzeige im Innenraum des Kraftfahrzeugs. Denkbar ist auch eine Ausbildung des Dekorelementes als Schalter oder auch lediglich als Schaltertaste. Denkbar sind auch Anwendungen der Erfindung für beleuchtbare Elemente, beispielsweise für Haushaltgeräte, beispielsweise Kühlschränke, Dampfgarer, Waschmaschinen, Backöfen, Kochherde, Geschirrspülmaschinen oder Möbel und dergleichen.

Nach einer Weiterbildung der Erfindung ist vorgesehen, dass sich das flächige Dekorelement wenigstens teilweise über den genannten Rand erstreckt. Die lichtführende Schicht ist hierbei vorzugsweise ebenfalls so ausgebildet, dass sie sich wenigstens bis in den Rand erstreckt. Vorzugsweise ist dieser Rand umlaufend. Damit kann ein besonders robustes und dennoch ästhetisch ansprechendes Bauteil hergestellt werden.

Die lichtabsorbierenden und/oder lichtstreuenden Mittel sind in der lichtführenden Schicht angeordnet. Diese Mittel weisen ein Pigment auf, das homogen in einer gespritzten Schicht vorhanden ist. Als Pigment eignen sich insbesondere Titandioxid oder Kobaltblau oder Russ. Nach einer Ausführung ist vorgesehen, dass lichtabsorbierende und/oder lichtstreuende Mittel in der Haftschicht und/oder der anderen Schicht an der Rückseite des Dekorelementes angeordnet ist. Die Haftschicht und/oder die andere Schicht können an einer Rückseite des Dekorelementes und/oder an einem anderen an die lichtführende Schicht angrenzenden Bestandteil des Bauteils wie z.B. die Oberfläche eines Gehäuses angeordnet sein und/oder das Material, aus welchem ein solcher Bestandteil besteht, weist lichtabsorbierenden und/oder lichtstreuenden Mittel auf. Die Haftschicht kann beispielsweise durch einen Haftvermittler (z.B. schwarz eingefärbter Heisssiegellack), beispielsweise einen Klebstoff (z.B. schwarz eingefärbter Klebstoff auf Epoxybasis oder Polyurethanbasis) oder beispielsweise durch einen Lack (z.B. schwarz eingefärbter Polyesterlack) gebildet sein. Die genannte andere Schicht ist beispielsweise eine Folie (z.B. eine schwarze Polyethylenfolie), beispielsweise eine galvanische Schwarzchrombeschichtung oder eine Schicht aus Titancarbonitrid oder Titanoxidnitrid.

Grundsätzlich kann auch die Rückseite des flächigen Dekorelementes lichtabsorbierend ausgebildet sein. Beispielsweise kann die Rückseite des Dekorelementes durch chemische Modifikation wie z.B. Nitrieren und damit Einbringen von Stickstoff lichtabsorbierend ausgebildet sein.

Nach einer Weiterbildung der Erfindung ist vorgesehen, dass zwischen dem Dekorelement und der lichtrührenden Schicht eine transparente Folie angeordnet ist, die sich wenigstens über den lichtdurchlässigen Bereich des Dekorelementes erstreckt. Diese transparente Folie ist vorzugsweise frei von lichtabsorbierenden und/oder lichtstreuenden Mitteln. Damit wird erreicht, dass besonders viel Licht von den Beleuchtungsmittel zum beleuchtbaren Bereich gelangt. Die transparente Folie ist vorzugsweise von der lichtrührenden Schicht hinterspritzt und greift vorzugsweise wenigstens teilweise in wenigstens einen Durchbruch des Dekorelementes ein.

Nach einer Weiterbildung der Erfindung ist vorgesehen, dass das Bauteil ein Gehäuse aufweist, mit dem es an einem Gegenstand, beispielsweise einer Karosserie oder dergleichen befestigbar ist. Die Befestigung erfolgt beispielsweise mit Rastmitteln oder dergleichen. Das Gehäuse ist vorzugsweise auch so ausgebildet, dass es das Beleuchtungsmittel aufnehmen kann. Vorzugsweise ist das Gehäuse so ausgebildet, dass es die Beleuchtungsmittel so abschirmt, dass das Licht nach hinten und seitlich nicht austreten kann. Vorzugsweise weisen die Bereiche des Gehäuses, welche an die lichtführende Schicht angrenzen, mindestens teilweise, vorzugsweise gesamthaft eine Haftschicht und/oder eine andere Schicht mit lichtabsorbierenden und/oder lichtstreuenden Mitteln auf und/oder das Material aus welchem das Gehäuse besteht, weist lichtabsorbierende und/oder lichtstreuende Mittel auf.

Ein besonders dekoratives Bauteil kann gemäss einer Weiterbildung dann hergestellt werden, wenn das Dekorelement aus Metall hergestellt ist. Vorzugsweise ist das Dekorelement eine Folie oder ein Blech, beispielsweise eine Metallfolie oder ein Metallblech, insbesondere eine Stahlfolie oder ein Stahlblech, eine Leichtmetallfolie oder ein Leichtmetallblech.

Weitere vorteilhafte Merkmale ergeben sich aus den abhängigen Patentansprüchen, der nachfolgenden Beschreibung sowie der Zeichnung.

Ausführungsbeispiele der Erfindung werden nachfolgend anhand der Zeichnung näher erläutert. Es zeigen:
- Fig. 1: schematisch ein Schnitt durch ein erfindungsgemässes Bauteil, das auf einem ebenfalls geschnittenen Teil montiert ist,
- Fig. 2: ein vergrösserter Teilschnitt gemäss Fig. 1,
- Fig. 3: ein Schnitt gemäss Fig. 1, wobei das flächige Dekorelement mit der hinterspritzten lichtrührenden Schicht abgehoben ist,
- Fig. 4: schematisch ein Schnitt durch ein montiertes erfindungsgemässes Bauteil nach einer Variante,
- Fig. 5: schematisch ein vergrösserter Teilschnitt nach Fig. 4 und
- Fig. 6: schematisch eine räumliche Ansicht eines montierten erfindungsgemässen Bauteils.

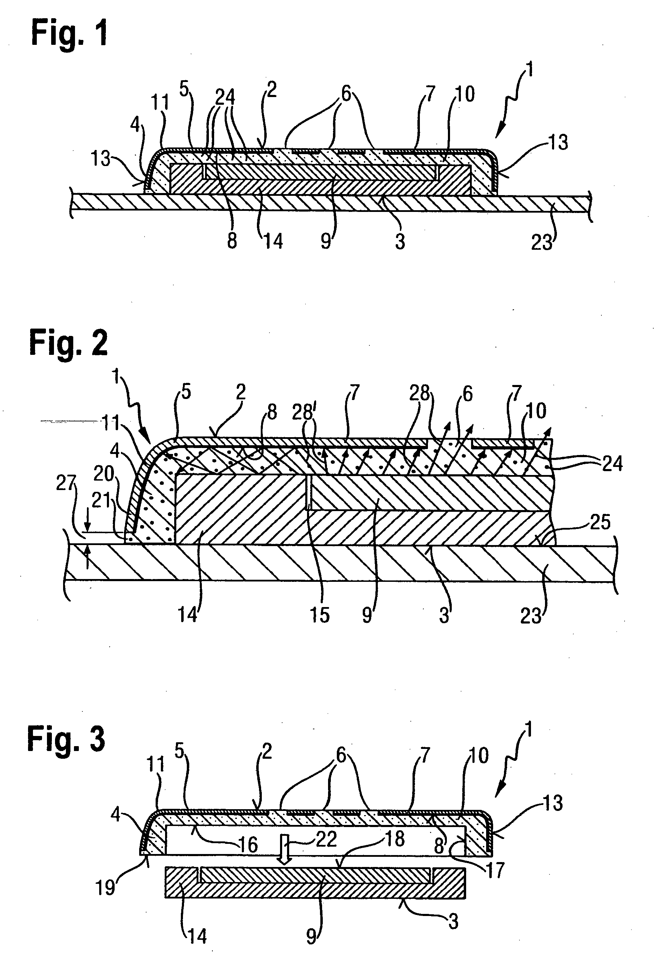

Das in den Figuren 1 und 2 gezeigte Bauteil 1 ist an einer Rückseite 3 auf einem Teil 23, beispielsweise einer Karosserie befestigt. Das Bauteil 1 kann beispielsweise auf einer Oberseite 25 des Teils 23 angeklebt oder auch mechanisch beispielsweise mit hier nicht gezeigten Rastmitteln befestigt sein. Diese Rastmittel können beispielsweise an der Unterseite 3 eines Gehäuses 14 angeordnet sein. Das Bauteil 1 ist beispielsweise eine Einstiegsleiste, eine Zierleiste, ein Bedienelement, beispielsweise für eine Armatur oder zum Herstellen einer Taste vorgesehen. Es besitzt eine Vorderseite 2, welche wenigstens bereichsweise eine Sichtseite bildet, einen die Vorderseite 2 umgebenden Rand 4, der eine Aussenseite 13 besitzt. Der Rand 4 und die Aussenseite 13 sind vorzugsweise umlaufend, was jedoch nicht zwingend ist. Die Vorderseite 2 kann eben sein. Möglich ist aber auch eine Ausführung mit einer unebenen Vorderseite, die beispielsweise Rillen und/oder Rippen aufweist.

Die Vorderseite 2 und vorzugsweise auch die Aussenseite 13 des Randes 4 wird bzw. werden durch ein flächiges Dekorelement 5 gebildet. Dieses ist wie ersichtlich seitlich über den Rand 4 gezogen und erstreckt sich im Wesentlichen bis zur Oberseite 25 des Teils 23. Grundsätzlich ist auch eine Ausführung denkbar, bei welcher das Dekorelement seitlich nicht nach unten gezogen ist. Wie insbesondere die Fig. 2 zeigt, kann zwischen einem umlaufenden Rand 20 des flächigen Dekorelementes 5 und der Oberseite 25 ein Spalt 21 vorhanden sein. Dieser ist in der Regel sehr klein, beispielsweise bevorzugt 0.1 bis 0.2 mm schmal. Vorzugsweise ist der Spalt 21 0.05 bis 1 mm und noch bevorzugter 0.05 bis 5 mm schmal. Der Abstand zwischen dem Rand 20 und der Oberseite 25 ist in der Fig. 2 mit dem Doppelpfeil 27 angedeutet. Ein solcher Spalt 21 kann auch durch eine Unebenheit des Teils 23 an der Oberseite 25 verursacht sein.

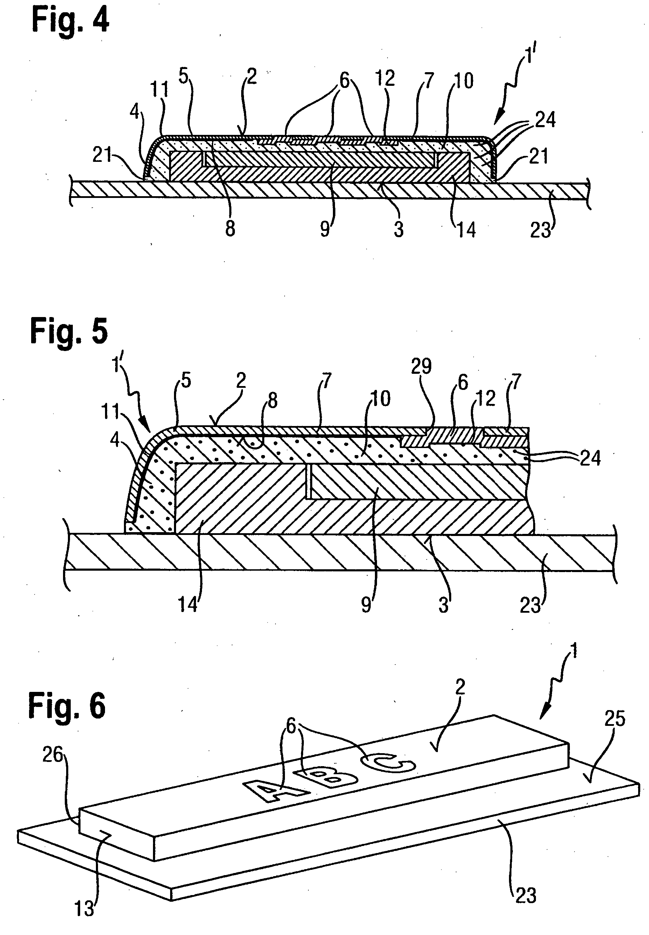

Das Dekorelement 5 besitzt einen lichtdurchlässigen Bereich 6, der beleuchtbar ist, und einen lichtundurchlässigen Bereich 7. Der Bereich 6 kann gemäss Fig. 6 beispielsweise Buchstaben darstellen. Es sind hier aber auch andere beispielsweise symbolische Darstellungen möglich. Der Bereich 6 wird beispielsweise durch Ausstanzungen des Dekorelementes 5 gebildet. Ausserhalb des Bereiches 6 ist das Dekorelement 5 für Licht nicht durchlässig. Dies ist beispielsweise dann der Fall, wenn das Dekorelement 5 aus Metall, beispielsweise aus einem Stahlblech oder Leichtmetallblech hergestellt ist. Grundsätzlich könnte das Dekorelement 5 jedoch auch aus einem lichtundurchlässigen Kunststoff hergestellt sein. Das Dekorelement 5 kann auch mehrschichtig sein.

Das Dekorelement 5 besitzt eine Rückseite 8, auf welcher eine Haftschicht 11 angebracht ist. Diese Haftschicht 11 dient insbesondere dazu, eine angespritzte lichtführende Schicht 10 fest mit dem Dekorelement 5 zu verbinden. Die Haftschicht 11 kann beispielsweise ein Haftvermittler, ein Klebstoff oder ein Lack sein. Diese sind vorzugsweise schwarz eingefärbt. Alternativ kann die Rückseite 8 chemisch behandelt sein. Die Rückseite 8 kann beispielsweise durch Nitrieren absorbierend gemacht werden. Möglich ist auch das Aufbringen einer galvanischen Schwarzchromschicht, einer schwarzen Polyethylenfolie oder eine Schicht aus Titancarbonitrid oder Titanoxidnitrid. Das Dekorelement 5 ist von der lichtführenden Schicht 10 hinterspritzt. Beim Hinterspritzen des Dekorelementes 5 mit der lichtrührenden Schicht 10 wird das Dekorelement 5 im Spritzgusswerkzeug entsprechend geformt. Gleichzeitig wird die lichtführende Schicht 10 mit dem Dekorelement 5 verbunden. Wie ersichtlich, erstreckt sich die lichtführende Schicht über die gesamte Rückseite 8 des Dekorelementes 5. Sie bildet den lichtdurchlässigen Bereich 6 und auch den Rand 4 sowie gemäss Fig. 3 eine umlaufende Stirnseite 19. Sie bildet zudem gemäss Fig. 3 eine rückseitige Ausnehmung 17 mit einer vorzugsweise flächigen Innenseite 16. Diese Ausnehmung 17 dient zur Aufnahme von Beleuchtungsmitteln 9, die in einem Gehäuse 14 gelagert sind. Die Beleuchtungsmittel 9 weisen beispielsweise eine lichtleitende Schicht auf, in die mit hier nicht gezeigten LED's Licht eingestrahlt wird. Die Beleuchtungsmittel 9 können aber beispielsweise auch eine Leuchtfolie aufweisen.

Das von den Beleuchtungsmitteln 9 abgegebene Licht gelangt durch die lichtführende Schicht 10 hindurch zum lichtdurchlässigen Bereich 6 und verlässt diesen, wie dies in Fig. 2 mit Lichtstrahlen 28 angedeutet ist. Ein Teil des Lichtes, das vom Beleuchtungsmittel 9 abgegeben wird, tritt hingegen nicht am lichtdurchlässigen Bereich 6 aus, sondern wird gemäss den angedeuteten Strahlen 28' seitlich in die lichtführende Schicht 10 eingestrahlt. Dieses Licht könnte grundsätzlich durch Reflexion bis zum Spalt 21 gelangen, der dadurch eine Leckstelle bilden würde. Um dies zu verhindern, enthält die lichtführende Schicht 10 ein Mittel 24, welches dieses Licht absorbiert und/oder streut. Die Wirkung der Absorbtion und/oder Streuung ist so eingestellt, dass im Wesentlichen kein Licht bis zum Spalt 21 gelangen kann, somit das Licht auf dem Weg zu diesem Spalt 21 im Wesentlichen vollständig absorbiert und/oder gestreut wird. Das Absorbtionsmittel und/oder Streumittel 24 wird durch ein Pigment gebildet, das in der lichtführenden Schicht 10 homogen verteilt ist. Das Absorbtionsmittel 24 kann grundsätzlich auch im lichtdurchlässigen Bereich 6 vorhanden sein. Der Weg, der das Licht vom Beleuchtungsmittel 9 bis zur Vorderseite 2 durchschreitet, ist vergleichsweise kurz, so dass hier die entsprechende Absorbtion und/oder Streuung vernachlässigt werden kann. Wie ersichtlich, ist der Weg von den Beleuchtungsmitteln 9 zum Spalt 21 um ein mehrfaches länger als von den Beleuchtungsmitteln 9 zur Aussenseite 2. Zudem müsste Lecklicht im Bereich einer Kante 26 die Richtung um etwa 90° ändern.

Zusätzlich zum Absorbtionsmittel und/oder Streumittel 24 in der lichtführenden Schicht, kann die Haftschicht 11 mit einem solchen Absorbtionsmittel und/oder Streumitteln versehen sein. Weiter kann auch das Gehäuse 14 mit Absorbtionsmitteln versehen sein. Wesentlich ist somit, dass das nicht am lichtdurchlässigen Bereich 6 austretende Licht auf dem Weg zum Spalt 21 im Wesentlichen vollständig absorbiert und/oder gestreut wird.

Die Figuren 4 und 5 zeigen ein Bauteil 1', das im Wesentlichen dem Bauteil 1 entspricht, jedoch zusätzlich eine Folie 12 aus einem lichtdurchlässigen Kunststoff aufweist. Diese Folie 12 ist von der lichtführenden Schicht 10 hinterspritzt und greift in Öffnungen 29 des Dekorelementes 5 ein. Diese Öffnungen 29 sind beispielsweise Ausstanzungen. Die Vorderseite 2 wird somit bereichsweise durch die hinterspritzte Folie 12 gebildet. Da die Folie 12 lichtdurchlässig ist und vorzugsweise keine Absorbtionsmittel und/oder Streumittel aufweist, wird auf dem Weg zum lichtdurchlässigen Bereich 6 weniger Licht absorbiert und/oder gestreut. Die Folie 12 wird vorzugsweise mit dem Dekorelement 5 in das Spritzgusswerkzeug eingelegt und beim Hinterspritzen der lichtführenden Schicht 10 zusammen mit dem Dekorelement 5 plastisch deformiert. Das Dekorelement 5 muss somit lediglich einmal zum Bilden der lichtführenden Schicht 10 hinterspritzt werden. Hierbei wird durch den Spritzdruck das Dekorelement 5 am entsprechenden Werkzeugteil geformt. Das hinterspritzte Dekorelement 5 wird dann gemäss Fig. 3 in Richtung des Pfeils 22 auf das Gehäuse 14 aufgesetzt, auf dem die Beleuchtungsmittel 9 gelagert sind. Das Bauteil 1 ist nun für die Montage bereit und kann gemäss Fig. 6 auf einem Teil 23 befestigt werden. Gegebenenfalls sind die Beleuchtungsmittel 9 über hier nicht gezeigte Kabel an eine elektrische Stromquelle anzuschliessen.

### BEZUGSZEICHENLISTE

- 1: Bauteil
- 2: Vorderseite
- 3: Rückseite
- 4: Rand
- 5: Dekorelement
- 6: lichtdurchlässiger Bereich
- 7: lichtundurchlässiger Bereich
- 8: Rückseite
- 9: Beleuchtungsmittel
- 10: lichtführende Schicht
- 11: Haftschicht
- 12: Folie
- 13: Aussenseite
- 14: Gehäuse
- 15: Ausnehmung
- 16: Innenseite
- 17: Ausnehmung
- 18: Oberseite
- 19: Stirnfläche
- 20: Rand (Dekorelement)
- 21: Spalt
- 22: Pfeil
- 23: Teil
- 24: Absorbtionsmittel
- 25: Oberseite
- 26: Kante
- 27: Doppelpfeil
- 28: Lichtstrahlen
- 29: Öffnungen

## Patentansprüche

1. Beleuchtbares Bauteil mit einer Sichtseite (2), einem die Sichtseite (2) umgebenden Rand (4) und einer Rückseite (3), umfassend ein flächiges Dekorelement (5) mit wenigstens einem lichtdurchlässigen Bereich (6) und wenigstens einem lichtundurchlässigen Bereich (7), Beleuchtungsmittel (9) zum Beleuchten des wenigstens einen lichtdurchlässigen Bereichs (6) und wenigstens eine zwischen dem Dekorelement (5) und den Beleuchtungsmitteln (9) angeordnete lichtführende Schicht (10), die an einer Rückseite (8) des Dekorelementes (5) angebracht ist und sich wenigstens bis in den Bereich des Randes (4) erstreckt, **dadurch gekennzeichnet, dass** in der lichtführenden Schicht (10) Mittel (24) vorgesehen sind, welche wenigstens ein in der lichtführenden Schicht (10) homogen verteiltes Pigment umfassen, und welche Licht beim Transport vom Beleuchtungsmittel (9) zum genannten Rand (4) im Wesentlichen vollständig absorbieren und/oder streuen.

2. Bauteil nach Anspruch 1, **dadurch gekennzeichnet, dass** sich das flächige Dekorelement (5) wenigstens teilweise in den Rand (4) erstreckt.

3. Bauteil nach einem der Ansprüche 1 bis 2, **dadurch gekennzeichnet, dass** die Rückseite des Dekorelementes (5) wenigstens bereichsweise vorzugsweise lichtabsorbierend und/oder lichtstreuend ausgebildet ist.

4. Bauteil nach Anspruch 3, **dadurch gekennzeichnet, dass** an der Rückseite (8) des Dekorelementes (5) eine Haftschicht (11) oder eine andere Schicht angeordnet ist, und dass diese Haftschicht (11) bzw. andere Schicht wenigstens bereichsweise Mittel für die Lichtabsorbtion und/oder Lichtstreuung aufweist.

5. Bauteil nach einem der Ansprüche 1 bis 4, **dadurch gekennzeichnet, dass** zwischen dem Dekorelement (5) und der lichtführenden Schicht (10) eine transparente Folie (12) angeordnet ist, die sich wenigstens über den lichtdurchlässigen Bereich (6) des Dekorelementes (5) erstreckt.

6. Bauteil nach Anspruch 5, **dadurch gekennzeichnet, dass** die transparente Folie (12) in wenigstens eine Öffnung (29) des Dekorelementes (5) eingreift.

7. Bauteil nach einem der Ansprüche 1 bis 6, **dadurch gekennzeichnet, dass** die lichtführende Schicht (10) an der Rückseite (8) des Dekorelementes (5) angespritzt ist.

8. Bauteil nach einem der Ansprüche 1 bis 7, **dadurch gekennzeichnet, dass** sich die lichtführende Schicht (10) im Wesentlichen über den ganzen Bereich der Rückseite (8) des Dekorelementes (5) erstreckt.

9. Bauteil nach einem der Ansprüche 1 bis 8, **dadurch gekennzeichnet, dass** die lichtführende Schicht (10) einen vergleichsweise schmalen Bereich (21) einer Randaussenseite (13) bildet.

10. Bauteil nach einem der Ansprüche 1 bis 9, **dadurch gekennzeichnet, dass** das Dekorelement (5) eine in einem Spritzgusswerkzeug geformte Folie, beispielsweise Metallfolie, insbesondere Stahlfolie ist.

11. Bauteil nach einem der Ansprüche 1 bis 10, **dadurch gekennzeichnet, dass** es ein Gehäuse (14) aufweist, das im Wesentlichen die Rückseite (3) des Bauteils bildet.

12. Bauteil nach einem der Ansprüche 1 bis 11, **dadurch gekennzeichnet, dass** es beispielsweise zum Herstellen einer Einstiegsleiste, einer Zierleiste, eines Bedienelementes oder einer Taste vorgesehen ist.

13. Bauteil nach einem der Ansprüche 1 bis 12, **dadurch gekennzeichnet, dass** das Dekorelement (5) selbst lichtabsorbierend und/oder lichtstreuend ausgebildet ist.

14. Bauteil nach Anspruch 13, **dadurch gekennzeichnet, dass** das Dekorelement (5) lichtabsorbierende und/oder lichtstreuende Mittel aufweist.

15. Bauteil nach einem der Ansprüche 1 bis 14, **dadurch gekennzeichnet, dass** das Dekorelement (5) mehrschichtig ist.

16. Bauteil nach einem der Ansprüche 1 bis 15, **dadurch gekennzeichnet, dass** das Dekorelement (5) aus Metall hergestellt ist.

17. Bauteil nach Anspruch 16, **dadurch gekennzeichnet, dass** das Dekorelement (5) eine Folie oder ein Blech ist, beispielsweise eine Metallfolie oder ein Metallblech, insbesondere eine Stahlfolie oder ein Stahlblech, eine Leichtmetallfolie oder ein Leichtmetallblech.

## Claims

1. An illuminable component having a visible face (2), an edge (4) surrounding the visible face (2) and a rear face (3) comprising a two-dimensionally extending decorative element (5) having at least one translucent region (6) and at least one non-translucent region (7), an illuminating element (9) for illuminating the at least one translucent region (6) and at least one light-guiding layer (10) arranged between the decorative element (5) and the illuminating element (9), said layer being attached to a rear face (8) of the decorative element (5) and extending at least as far as the region of the edge (4), **characterised in that** an element (24) is provided in the light-guiding layer (10), which element (24) comprises at least one pigment distributed homogenously in the light-guiding layer (10), and which substantially completely absorbs and/or scatters light when conveyed by the illuminating element (9) to the aforementioned edge (4).

2. The component as claimed in Claim 1, **characterised in that** the two-dimensionally extending decorative element (5) extends at least partially into the edge (4).

3. The component as claimed in one of Claims 1 to 2, **characterised in that** the rear face of the decorative element (5) is at least partially preferably configured to be light-absorbing and/or light-scattering.

4. The component as claimed in Claim 3, **characterised in that** on the rear face (8) of the decorative element (5) an adhesive layer (11) or a further layer is arranged and that said adhesive layer (11) and/or further layer has at least partially the element for light absorption and/or light scattering.

5. The component as claimed in one of Claims 1 to 4, **characterised in that** between the decorative element (5) and the light-guiding layer (10) a transparent film (12) is arranged which extends at least over the translucent region (6) of the decorative element (5).

6. The component as claimed in Claim 5, **characterised in that** the transparent film (12) engages in at least one opening (29) of the decorative element (5).

7. The component as claimed in one of Claims 1 to 6, **characterised in that** the light-guiding layer (10) is injection-moulded onto the rear face (8) of the decorative element (5).

8. The component as claimed in one of Claims 1 to 7, **characterised in that** the light-guiding layer (10) extends substantially over the entire region of the rear face (8) of the decorative element (5).

9. The component as claimed in one of Claims 1 to 8, **characterised in that** the light-guiding layer (10) forms a relatively narrow region (21) of an edge outer face (13).

10. The component as claimed in one of Claims 1 to 9, **characterised in that** the decorative element (5) is a film shaped in an injection-moulding tool, for example a metal film, in particular a steel film.

11. The component as claimed in one of Claims 1 to 10, **characterised in that** it comprises a housing (14), which substantially forms the rear face (3) of the component.

12. The component as claimed in one of Claims 1 to 11, **characterised in that** it is provided, for example, for producing a sill strip, a decorative strip, an operating element or a pushbutton.

13. The component as claimed in one of Claims 1 to 12, **characterised in that** the decorative element (5) itself is configured to be light-absorbing and/or light-scattering.

14. The component as claimed in Claim 13, **characterised in that** the decorative element (5) has a light-absorbing and/or light-scattering element.

15. The component as claimed in one of Claims 1 to 14, **characterised in that** the decorative element (5) is multi-layered.

16. The component as claimed in one of Claims 1 to 15, **characterised in that** the decorative element (5) is produced from metal.

17. The component as claimed in Claim 16, **characterised in that** the decorative element (5) is a film or a sheet, for example a metal film or a metal sheet, in particular a steel film or steel sheet, a light metal film or a light metal sheet.

## Revendications

1. Pièce pouvant être éclairée avec une face avant (2), un bord (4) entourant la face avant (2) et une face arrière (3), comprenant un élément de décor (5) s'étendant en deux dimensions avec au moins une zone transparente (6) et au moins une zone (7) opaque, des moyens d'éclairage (9) pour éclairer la au moins une zone (6) transparente et au moins une couche (10) conductrice de la lumière disposée entre l'élément de décor (5) et les moyens d'éclairage (9) qui est placée sur une face arrière (8) de l'élément de décor (5) et s'étend au moins jusque dans la zone du bord (4), **caractérisée en ce que** dans la couche (10) conductrice de lumière sont prévus des moyens (24) qui comprennent au moins un pigment réparti de façon homogène dans la couche (10) conductrice de lumière et qui absorbent et/ou diffusent complètement pour l'essentiel la lumière lors du transport du moyen d'éclairage (9) au bord (4) désigné.

2. Pièce selon la revendication 1 **caractérisée en ce que** l'élément de décor (5) s'étendant en deux dimensions s'étend au moins partiellement dans le bord (4).

3. Pièce selon une quelconque des revendications 1 à 2 **caractérisée en ce que** la face arrière de l'élément de décor (5) est constituée au moins par zone de préférence absorbant la lumière et/ou diffusant la lumière.

4. Pièce selon la revendication 3 **caractérisée en ce que** sur la face arrière (8) de l'élément de décor (5) est disposé une demie couche (11) ou une autre couche et **en ce que** cette demie couche (11) ou autre couche présente au moins par zone des moyens pour l'absorption et/ou la diffusion de la lumière.

5. Pièce selon une quelconque des revendications 1 à 4 **caractérisée en ce qu'**entre l'élément de décor (5) et la couche conductrice de lumière (10) est disposée une feuille (12) transparente qui s'étend au moins sur la zone transparente (6) de l'élément de décor (5).

6. Pièce selon la revendication 5 **caractérisée en ce que** la feuille (12) transparente est en prise au moins dans une ouverture (29) de l'élément de décor (5).

7. Pièce selon une quelconque des revendications 1 à 6 **caractérisée en ce que** la couche (10) conductrice de lumière est projetée sur la face arrière (8) de l'élément de décor (5).

8. Pièce selon une quelconque des revendications 1 à 7 **caractérisée en ce que** la couche (10) conductrice de lumière s'étend pour l'essentiel sur toute la zone de la face arrière (8) de l'élément de décor (5).

9. Pièce selon une quelconque des revendications 1 à 8 **caractérisée en ce que** la couche (10) conductrice de lumière forme une zone (21) comparativement étroite d'une face extérieure de bord (13).

10. Pièce selon une quelconque des revendications 1 à 9 **caractérisée en ce que** l'élément de décor (5) est une feuille formée dans un outil de moulage par injection, par exemple une feuille métallique, en particulier une feuille d'acier.

11. Pièce selon une quelconque des revendications 1 à 10 **caractérisée en ce qu'**elle présente un boîtier (14), qui constitue pour l'essentiel la face arrière (3) de la pièce.

12. Pièce selon une quelconque des revendications 1 à 11 **caractérisée en ce qu'**elle est prévue par exemple pour la fabrication d'un listeau d'accès, d'une baguette décorative, d'une élément de commande ou d'une touche.

13. Pièce selon une quelconque des revendications 1 à 12 **caractérisée en ce que** l'élément de décor (5) est constitué lui-même absorbant la lumière et/ou diffusant la lumière.

14. Pièce selon la revendication 13 **caractérisée en ce que** l'élément de décor (5) présente des moyens absorbant la lumière et/ou diffusant la lumière.

15. Pièce selon une quelconque des revendications 1 à 14 **caractérisée en ce que** l'élément de décor (5) est multicouches.

16. Pièce selon une quelconque des revendications 1 à 15 **caractérisée en ce que** l'élément de décor (5) est fabriqué en métal.

17. Pièce selon la revendication 16 **caractérisée en ce que** l'élément de décor (5) est une feuille ou une tôle, par exemple une feuille de métal ou une tôle métallique, en particulier une feuille d'acier ou une tôle d'acier, une feuille de métal léger ou une tôle de métal léger.
